# FASCICULE DE BREVET EUROPEEN

(11) **EP 2 473 318 B1**
(45) Date de publication et mention de la délivrance du brevet: **29.01.2014**
(21) Numéro de dépôt: 10762987.5
(22) Date de dépôt: 17.08.2010
(51) Int. Cl.: B24C 1/00, B24C 3/04

(54) **CALORIFUGATION DES CANALISATIONS D'UNE INSTALLATION DE TRAVAIL PAR JETS DE FLUIDE CRYOGÉNIQUE**
ROHRISOLIERUNG EINER ARBEITSANLAGE MIT KRYOGENEN FLÜSSIGKEITSSTRAHLEN
INSULATING PIPES OF A FACILITY FOR WORKING BY MEANS OF CRYOGENIC FLUID JETS

(30) Priorité: 03.09.2009 FR 0956008
(43) Date de publication de la demande: 11.07.2012
(73) Titulaire: L'Air Liquide Société Anonyme pour l'Etude et l'Exploitation des Procédés Georges Claude, 75007 Paris (FR)
(72) Inventeur: QUINTARD, Jacques, F-95590 Presles (FR); RICHARD, Frédéric, F-95620 Parmain (FR); TRUCHOT, Charles, F-78300 Poissy (FR)
(74) Mandataire: Pittis, Olivier
(86) Numéro de dépôt international: PCT/FR2010/051722
(87) Numéro de publication internationale: WO 2011/027064

(56) Documents cités:
- WO-A1-98/28107
- DE-A1- 10 160 902
- US-A1- 2006 049 274

## Description

L'invention porte sur une installation et un procédé de décapage, d'écroutage, de traitement de surface de matériaux revêtus ou non, tels les métaux, le béton, le bois, les polymères, les plastiques ou tout autre type de matériau, par jets de fluide cryogénique à très haute pression.

Actuellement, le traitement de surface de matériaux revêtus ou non, en particulier le décapage, l'écroutage ou analogue, de béton, de peinture..., se fait essentiellement par sablage, par projection d'eau à ultra haute pression (UHP), à la ponceuse, au marteau-piqueur, à la bouchardeuse ou encore par voie chimique.

Toutefois, lorsqu'il doit ne pas y avoir d'eau, par exemple en milieu nucléaire, ou de produit chimique, par exemple du fait de contraintes environnementales drastiques, seuls des procédés de travail dits « à sec » peuvent être utilisés.

Cependant, dans certains cas, ces procédés « à sec » sont difficiles à mettre en oeuvre, sont très laborieux ou pénibles à utiliser ou encore génèrent des pollutions supplémentaires, par exemple du fait de l'ajout de grenaille ou de sable à retraiter ensuite.

Une alternative à ces technologies repose sur l'utilisation de jets cryogéniques sous très haute pression, comme proposé par les documents US-A-7,310,955 et US-A-7,316,363. Dans ce cas, on utilise un ou des jets d'azote liquide à une pression de 1000 à 4000 bars et à température cryogénique comprise par exemple entre -100 et -200°C, typiquement environ -140 et -160°C qui sont distribués par un outil porte-buse(s) qui est mis en mouvement, typiquement un mouvement de rotation ou d'oscillation.

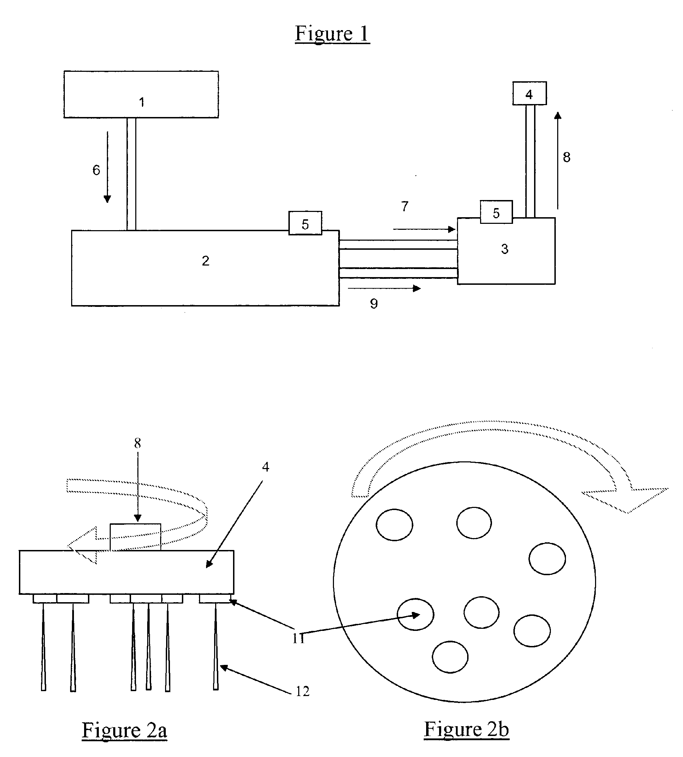

Une installation de travail, par exemple de décapage, d'écroutage, de traitement de surface de matériaux revêtus ou non, tels les métaux, le béton, le bois, les polymères, les plastiques ou tout autre type de matériau, mettant en oeuvre des jets cryogéniques sous très haute pression est décrite en détail ci-après et illustrée en Figure 1.

Dans une telle installation, l'azote liquide circule dans des canalisations ou conduites d'alimentation en fluide cryogénique où l'azote est des pressions et températures différentes selon la canalisation considérée, notamment à très basse températures, c'est-à-dire jusqu'à des températures cryogéniques allant jusqu'à environ -180°C.

On comprend aisément que pour maintenir l'azote liquide à température cryogénique, il est nécessaire d'isoler ou calorifuger les canalisations pour éviter le réchauffement de l'azote lors de son transfert entre les différents éléments de l'installation.

En effet, certaines de ces canalisations peuvent être très longues et donc constituer une surface d'échange thermique importante avec l'atmosphère ambiant. Ainsi, la canalisation amenant l'azote depuis la citerne jusqu'à l'installation a rarement une longueur inférieure à plusieurs mètres, voire dizaines de mètres, typiquement sa longueur est comprise entre environ 10 et 400 m, généralement entre environ 50 et 250 m.

Pour isoler ou calorifuger ces canalisations, on peut procéder à une isolation :
- au moyen de matériaux isolants disposés autour des canalisations pour y former une barrière thermique mécanique. Toutefois, au vu des températures très basses considérées, cette solution n'est pas très efficace et montre vite ses limites.
- par mise sous vide de tout ou partie des canalisations. Toutefois, cette solution est loin d'être idéale car onéreuse et compliquée puisqu'elle nécessite l'utilisation de dispositifs sous vide, telles des pompes à vides qui doivent être intégrées à l'installation, qui prennent de la place, qu'il convient d'entretenir régulièrement, qui sont consommatrices d'énergie...

Le problème qui se pose est dès lors de pouvoir isoler efficacement une, des ou les canalisations véhiculant le fluide cryogénique au sein d'une installation de travail mettant en oeuvre des jets cryogéniques sous très haute pression, sans toutefois engendrer de coûts importants de mise en oeuvre ou d'entretien, ni compliquer excessivement l'architecture globale de l'installation.

La solution de l'invention est une installation de travail mettant en oeuvre au moins un jet de fluide à température cryogénique sous haute pression comprenant :
- au moins un outil mobile comportant une ou plusieurs buses de distribution de fluide cryogénique, et
- une ou plusieurs canalisations de fluide aptes à et conçues pour véhiculer du fluide à température cryogénique jusqu'audit outil de manière à alimenter au moins une buse de distribution de fluide dudit outil mobile en ledit fluide à température cryogénique sous haute pression, et
- au moins une partie de la ou des canalisations de fluide comprenant des moyens de calorifugation permettant d'isoler thermiquement ladite au moins une partie de canalisation, caractérisée en ce que les moyens de calorifugation comprennent :
- au moins une enceinte agencée autour de tout ou partie de ladite au moins une canalisation ou partie de canalisation à calorifuger,
- au moins une source de gaz de calorifugation, et
- des moyens d'alimentation en gaz de calorifugation reliant fluidiquement ladite au moins une source de gaz de calorifugation à l'intérieur de ladite au moins une enceinte de manière à alimenter ladite au moins une enceinte en gaz de calorifugation provenant de ladite au moins une source de gaz de calorifugation et former une atmosphère gazeuse isolante au sein de ladite au moins une enceinte.

Selon le cas, l'installation de l'invention peut comprendre l'une ou plusieurs des caractéristiques suivantes :
- elle comporte en outre au moins une source de fluide à température cryogénique contenant un fluide à température cryogénique à véhiculer jusqu'à l'outil. La ou les canalisations de fluide sont aptes à et conçues pour véhiculer du fluide à température cryogénique provenant de la au moins une source de fluide à température cryogénique jusqu'à l'outil de distribution de fluide.
- au moins une enceinte comprend une entrée de gaz reliée fluidiquement aux moyens d'alimentation en gaz et une sortie de gaz reliée fluidiquement à l'atmosphère de manière à créer un balayage gazeux isolant au sein de ladite au moins une enceinte.
- au moins une source de gaz de calorifugation est une source d'azote.
- elle comporte une source de fluide à température cryogénique et au moins un échangeur thermique comprenant un dispositif d'échappement, en particulier un évent, agencé entre la source de fluide à température cryogénique et l'outil, et au moins une source de gaz de calorifugation comprend le dispositif d'échappement d'au moins un échangeur thermique.
- la source de gaz de calorifugation comprend le dispositif d'échappement d'au moins un échangeur thermique et les moyens d'alimentation en gaz de calorifugation étant relié fluidiquement audit dispositif d'échappement de manière à pouvoir récupérer au moins une partie du gaz s'échappant par ledit dispositif d'échappement, le convoyer et l'introduire subséquemment dans au moins une enceinte agencée autour de tout ou partie de ladite au moins une canalisation ou partie de canalisation à calorifuger.
- les moyens d'alimentation en gaz de calorifugation comprennent au moins une canalisation d'amenée de gaz, de préférence au moins une canalisation d'amenée de gaz équipée d'un dispositif de contrôle et/ou réglage de débit du gaz.
- au moins une enceinte comprenant une structure tubulaire formant manchon autour de tout ou partie de ladite au moins une canalisation ou partie de canalisation à calorifuger.
- au moins une enceinte comprenant une première et une seconde structure tubulaire concentrique formant un double manchon autour de tout ou partie de ladite au moins une canalisation ou partie de canalisation à calorifuger.
- au moins une couche de matériau isolant est agencée autour d'au moins une partie de la périphérie externe de l'enceinte, de préférence le matériau isolant est une mousse isolante, en particulier une mousse de polyuréthane.
- l'outil est mobile en rotation ou en oscillation.

L'invention concerne aussi un procédé pour calorifuger tout ou partie d'au moins une canalisation de fluide d'une installation de travail mettant en oeuvre au moins un outil comportant une ou plusieurs buses de distribution de fluide cryogénique et alimenté, directement ou indirectement, en fluide à température cryogénique par l'intermédiaire de ladite au moins une canalisation de fluide, notamment une installation de travail selon l'invention, caractérisé en ce que :
a) on agence au moins une enceinte autour de tout ou partie de ladite au moins une canalisation ou partie de canalisation à calorifuger, et
b) on introduit dans ladite enceinte du gaz de calorifugation issu d'au moins une source de gaz de calorifugation de manière à former une atmosphère gazeuse isolante au sein de ladite au moins une enceinte et autour de tout ou partie de ladite au moins une canalisation ou partie de canalisation à calorifuger.

Selon le cas, le procédé de l'invention peut comprendre l'une ou plusieurs des caractéristiques suivantes :
- le fluide à température cryogénique est issu d'au moins une source de fluide à température cryogénique, tel un réservoir de stockage ou analogue.
- le gaz de calorifugation est de l'azote.
- le gaz de calorifugation est de l'azote provenant du dispositif d'échappement d'un échangeur thermique de l'installation.
- le fluide cryogénique distribué par la ou les buses de l'outil est de l'azote liquide à une pression d'au moins 100 bar, de préférence d'au moins 300 bar, de préférence encore entre 1000 et 5000 bar, et à une température inférieure à -140°C, de préférence entre -140 et -180°C environ.
- le débit du gaz de calorifugation est compris entre 1 000 et 20 000 l/min, de préférence entre 5 000 et 15 000 l/min.
- au moins une couche de matériau isolant est agencée autour d'au moins une partie de la périphérie externe de l'enceinte.
- le gaz de calorifugation a, à l'entrée de l'enceinte de calorifugation une pression apte à compenser les pertes de charge créées par l'enceinte sur ce gaz, c'est-à-dire une pression supérieure à 1 bar absolu, de préférence supérieure à 2 bars
- le gaz de calorifugation sera à co-courant ou à contre-courant du liquide cryogénique à refroidir.

Par ailleurs, l'invention porte aussi sur un procédé de traitement de surface, de décapage ou d'écroutage, d'un matériau par fluide cryogénique à haute pression, dans lequel on met en oeuvre une installation ou un procédé selon l'invention.

L'invention va maintenant être décrite plus en détail en références aux Figures annexées parmi lesquelles :
- la Figure 1 schématise le fonctionnement d'une installation de travail mettant en oeuvre des jets cryogéniques sous très haute pression,
- les Figures 2a (vue de côté) et 2b (vue de dessous) schématisent l'outil porte-buses équipant l'installation de la Figure 1,
- la Figure 3 schématise un premier mode de réalisation d'une enceinte de calorifugation selon l'invention,
- la Figure 4 schématise un deuxième mode de réalisation d'une enceinte de calorifugation selon l'invention, et
- la Figure 5 schématise une installation de travail selon l'invention.

La Figue 1 schématise une installation classique de décapage, de traitement de surface ou analogue par jets de liquide cryogénique comportant habituellement un réservoir de stockage 1, telle une citerne, d'azote liquide (ci-après appelé LN₂) qui alimente, via une ligne d'amenée 6 d'azote liquide sous basse pression, c'est-à-dire à environ de 3 à 6 bar et à une température d'environ -180°C, un dispositif de compression 2, avec compresseur et échangeur thermique amont interne permettant une mise à ultra haute pression (UHP) de l'azote liquide. Le dispositif de compression 2 permet donc de réaliser la compression du LN₂ provenant du réservoir de stockage 1.

Le LN₂ à la première pression (UHP) est alors véhiculé via une ligne de convoyage (7), jusqu'à un échangeur thermique aval 3 externe où le LN2 UHP subit un refroidissement avec de l'azote liquide à pression atmosphérique (en 9), pour obtenir typiquement de l'azote liquide UHP.

Il en résulte du LN₂ à une pression (UHP) typiquement supérieure à 300 bar, généralement comprise entre 2000 bar et 5000 bar, avantageusement comprise entre environ 3000 et 4000 bar, et à une température inférieure à -140°C, typiquement entre -140°C et - 180°C, par exemple de l'ordre d'environ -150 à -160°C, qui est envoyé, via la ligne d'alimentation 8, vers l'outil 4 de décapage ou analogue délivrant un ou plusieurs jets d'azote liquide UHP, en général plusieurs jets.

Le réservoir 1 de grande capacité, telle une citerne de camion ou un réservoir de stockage de plusieurs milliers de litres d'azote liquide, est généralement situé à l'extérieur des bâtiments, c'est-à-dire à l'air libre. Il peut être fixe ou mobile, et est relié de manière classique à l'installation, c'est-à-dire au moyen d'une ou des tuyauteries calorifugées 6 comprenant une ou des vannes de contrôle... En outre, le convoyage du LN₂ entre les différents éléments du système se fait également via des canalisations calorifugées 7, 8.

En général, le dispositif de compression 2, l'échangeur externe 3 et surtout l'outil 4 sont en principe situés dans un ou des bâtiments.

Au cours du fonctionnement du procédé de traitement thermique ou analogue, il s'échappe continuellement de l'azote gazeux à pression atmosphérique (environ 1 bar) et à environ -196°C des deux échangeurs, à savoir de l'échangeur amont du dispositif de compression 2 et de l'échangeur aval 3. Cet échappement d'azote gazeux se fait via un dispositif d'échappement, tel un évent ou analogue, agencé sur chacun desdits échangeurs thermiques 2, 3.

Dans les installations de l'art antérieur, cet azote relargué n'est pas réutilisé mais est généralement collecté et évacué, via des évents 5, hors des bâtiments pour éliminer les risques d'anoxie des personnels, c'est-à-dire qu'il constitue un gaz-déchet qui est évacué à l'atmosphère.

Comme illustré sur les Figures 2a (vue de côté) et Figure 2b (vue de dessous), pour augmenter la taille de la surface traitée, c'est-à-dire décapée ou analogue, on utilise typiquement un outil 4 équipé de buses 11 du type de celles utilisées dans les procédés à jet d'eau UHP, mais alimentées ici par du LN₂ UHP (en 8) et que l'on met en rotation ou en oscillation de manière à obtenir des jets rotatifs ou oscillants 12 de LN₂ UHP qui sont utilisés pour décaper (ou de façon équivalente) la surface à traiter. De façon connue en soi, l'outil 4 porte-buses est habituellement mis en rotation par un jeu de pignons, avec ou sans courroie de transmission, mu par un moteur électrique ou pneumatique par l'intermédiaire d'un premier arbre ou axe de transmission rotatif relié au moteur, d'une boite, d'un boitier ou d'une enceinte de transmission comprenant un mécanisme de transmission à jeu de pignons interne et d'un deuxième arbre ou axe de transmission ici rotatif relié quant à lui à l'outil 4 mobile muni des buses.

Comme susmentionné et visible sur la Figure 1, l'azote liquide circule donc au travers de l'installation dans des tuyaux, conduites 6, 7, 8 ou analogues, souvent en acier inoxydable, situés notamment :
- entre la citerne 1 d'azote liquide et le compresseur puis l'échangeur externe du dispositif de compression 2, notamment via la ligne 6 véhiculant de l'azote à basse pression (environ 5 à 6 bars) et à -180°C,
- entre dispositif de compression 2 et l'échangeur avant 3, via la ligne 7 véhiculant de l'azote à ultra haute pression (entre 3000 et 4000 bars) et à température de l'ordre de -40 °C, et
- entre l'échangeur avant 3 et l'outil 4, via la ligne d'alimentation 8 convoyant de l'azote liquide à ultra haute pression (entre 3000 et 4000 bars) et environ -150°C.

Or, les conduites ou lignes 6 et 7 doivent absolument être calorifugées, c'est-à-dire protégées par exemple par un matériau isolant pour réduire les déperditions de chaleur (ici de frigories) qui peuvent s'y produire car ces lignes peuvent être très longues, typiquement elles mesurent plusieurs mètres, voire dizaines de mètres, par exemple entre 5 et 300 m, typiquement de l'ordre de 10 à 250 m. De même, il est aussi recommandé de calorifuger le tuyau situé entre le dispositif de compression 2 et l'échangeur externe 3.

En effet, il convient d'empêcher que des échanges de chaleur parasites ne viennent réchauffer l'azote liquide circulant dans le circuit de canalisations de l'installation, lesquels risqueraient d'engendrer une vaporisation de l'azote liquide et une formation intempestive et non souhaitée d'azote gazeux.

Partant de là, l'idée à la base de la présente invention est de récupérer l'azote gazeux habituellement rejeté par les évents équipant les échangeurs thermiques 2 et 3 et de s'en servir comme gaz de calorifugation distribué autour des canalisations 6, 7, 8 à isoler thermiquement afin de maintenir, à moindre coût, l'azote liquide circulant à l'intérieur de ces canalisations 6, 7, 8 à des températures cryogéniques, c'est-à-dire entre -140°C et -180°C, et ce, sans formation d'azote gazeux non désiré. L'azote gazeux utilisé comme gaz de calorifugation et qui provient de l'échangeur externe 3 et/ou de l'échangeur interne du dispositif de compression 2 est donc recyclé au lieu d'être envoyé directement à l'atmosphère via les évents 5.

Toutefois, le gaz de calorifugation, tel de l'azote gazeux, peut aussi provenir, en tout ou en partie, d'une autre source de gaz, en particulier on peut utiliser de l'azote gazeux provenant d'une bouteille, d'un récipient, d'un réservoir de gaz, d'une canalisation d'amenée de gaz ou d'un réseau de canalisations... Cependant, on préférera utiliser l'azote gazeux habituellement rejeté par les évents équipant les échangeurs thermiques 2 et 3 ou le gaz du ciel gazeux de la citerne ou réservoir.

L'azote gazeux utilisé comme gaz de calorifugation est en fait distribué au sein d'une ou plusieurs enceintes agencées autour canalisations 6, 7, 8 à protéger de manière à créer un balayage gazeux interne au sein de chaque enceinte, donc au contact de la ligne à protéger.

L'azote gazeux issu des évents des échangeurs 2, 3 étant de l'azote froid, c'est-à-dire typiquement à une température de l'ordre de -185 à 196°C environ, il permettra de limiter le réchauffement de l'azote circulant dans lesdites canalisations 6, 7, 8 et donc d'empêcher ou de minimiser sa vaporisation intempestive.

L'azote utilisé pour le calorifugeage de la canalisation 6 entre la citerne et le dispositif 2 de compression, est rejeté à l'air libre, c'est-à-dire à l'atmosphère ambiant, après son extraction ou sa sortie de l'enceinte équipant la ligne 6 d'amenée, de préférence le rejet à l'atmosphère se fait près de la citerne 1.

Pour le calorifugeage de la ou des canalisations 7 entre le dispositif 2 de compression et l'échangeur 3 externe, ainsi que celui de la ligne 8 joignant l'échangeur 3 externe à l'outil 4, l'azote est rejeté à l'atmosphère ambiant à l'extérieur du local dans lequel est situé l'échangeur thermique aval 3, par exemple au niveau de l'extraction de la salle ou via un système d'aspiration dédié.

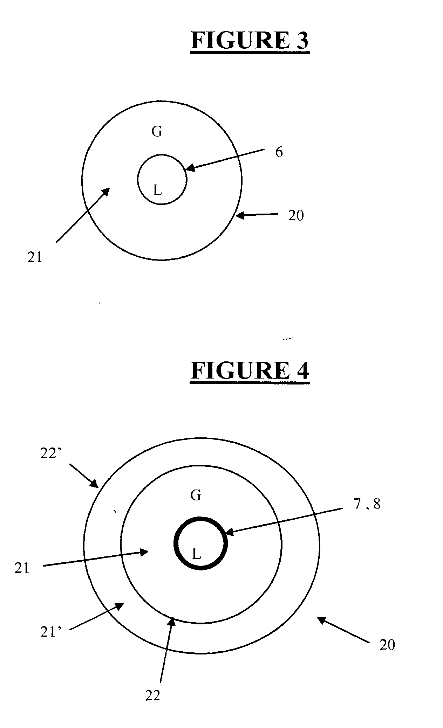

Comme illustré en Figure 3 qui représente un premier mode de réalisation d'une enceinte de calorifugation 20 selon l'invention (vue en section), que l'on peut utiliser en tant qu'enceinte de calorifugeage 20 dans laquelle est introduit l'azote gazeux (G) à basse pression (environ 5 à 6 bars), un tube ou manchon de diamètre plus important que celui du conduit 6 à isoler dans lequel circule l'azote liquide (L). Dans ce cas, les deux tubes 20 et 6 sont, en principe, concentriques ou quasi concentriques. Cette enceinte de calorifugeage 20 peut également équiper une ligne 7, 8 d'azote gazeux (L) à haute pression (environ 3000 à 4000 bars).

Par ailleurs, la Figure 4 représente un deuxième mode de réalisation d'une enceinte de calorifugation 20 selon l'invention (vue en section), qui est formée ici de deux tubes ou manchons 22, 22' de diamètre plus important que celui du conduit 6 à isoler dans lequel circule l'azote liquide (L). Dans ce cas, les trois tubes 22, 22' et 6 sont, en principe, concentriques ou quasi concentriques.

Ces deux tubes ou manchons 22, 22' forment un système d'aller-retour de gazeux isolant permettant notamment d'éviter ou minimiser les rejets d'azote gazeux dans les bâtiments et donc les risques d'anoxie du personnel. Dans ce cas, l'azote gazeux est introduit dans par exemple le premier tube isolant 22, circule à l'intérieur 21 de celui-ci en balayant la surface externe du conduit central 7 renfermant l'azote liquide sous haute pression, puis pénètre à l'intérieur 21' du second tube isolant 22', circule à l'intérieur 21' de celui-ci en balayant, en sens inverse, la surface externe du premier tube isolant 22, avant d'être évacué vers l'atmosphère comme expliqué ci-avant.

Ces deux tubes 22, 22' contenant de l'azote gazeux (G) à basse température provenant des évents 5 des échangeurs thermiques 2, 3 font donc office de barrière thermique limitant les échanges thermiques entre l'atmosphère ambiant et le conduit central 7, 8, c'est-à-dire la perte de frigories et le réchauffement de l'azote liquide véhiculé par le conduit central 7, 8.

A noter qu'il est également préférable de disposer quelques centimètres, par exemple de 1 à 6 cm, d'un matériau isolant, tel du caoutchouc ou un monomère éthylène-propylène-diène (EPDM), autour de la surface externe des canalisations à isoler pour des questions thermiques mais aussi pour protéger l'opérateur contre les brulures cryogéniques éventuelles.

En tant que matériau d'isolation supplémentaire, on peut aussi utilisé du poly-isocyanurate, du polyuréthane, de la laine de verre, de la laine de roche ou tout autre type d'isolant classique.

La Figue 5 schématise une installation de décapage, de traitement de surface ou analogue par jets de liquide cryogénique selon la présente invention. Comme on le voit, celle-ci est analogue à celle de la Figure 1 mis à part que les lignes d'amenée d'azote 6, 7, 8 ont été équipées chacune d'une enceinte de calorifugation 20 selon l'invention, par exemple des tubes concentriques 20, 22, 22' selon le principe des Figures 3 ou 4, qui sont alimentées en azote provenant des évents 5 des échangeurs thermiques 2, 3 de l'installation. L'azote de calorifugation est récupéré en sortie des évents 5 puis convoyé, via des lignes 25 d'amenée d'azote gazeux, jusqu'aux enceinte 20.

Dans le cas présent, l'évent 5 de l'échangeur amont du dispositif de compression 2 alimente les enceintes 20 isolantes équipant les lignes 6 et 7, alors que l'enceinte 20 de la ligne 8 est alimentée par de l'azote provenant de l'évent 5 de l'échangeur aval 3. Toutefois, ce mode de réalisation n'est pas exclusif ou limitatif, c'est-à-dire que n'importe quel évent 5 peut alimenter n'importe quel enceinte 20 de n'importe quelle ligne 6, 7, 8.

Comme détaillé pour l'enceinte 20 équipant la ligne 6, l'azote gazeux convoyé par le circuit de canalisation 25 est introduit, via une entrée 26, dans l'enceinte 20 de sorte d'y créer un balayage gazeux, comme expliqué ci-avant, puis est extrait de l'enceinte 20, via une sortie 27, avant d'être convoyé et rejet à l'atmosphère 28. Les différentes enceintes 20 peuvent fonctionner selon le même principe.

Il est à noter qu'au lieu de rejeter l'azote sortant d'une sortie 27 d'une première enceinte, on pourrait aussi le récupérer et l'envoyer vers l'entrée 26 d'une seconde enceinte 20, et ainsi de suite, de manière à créer une sorte de circuit de gaz de balayage. De même, il est également possible de prévoir plusieurs entrées 26 et/ou plusieurs sorties au sein d'une même enceinte 20.

L'azote gazeux peut balayer la surface des lignes 6, 7, 8 au sein des enceintes 20, à co-courant ou à contre-courant.

### Exemple : Efficacité d'une isolation avec de l'azote gazeux à une température de-196°C

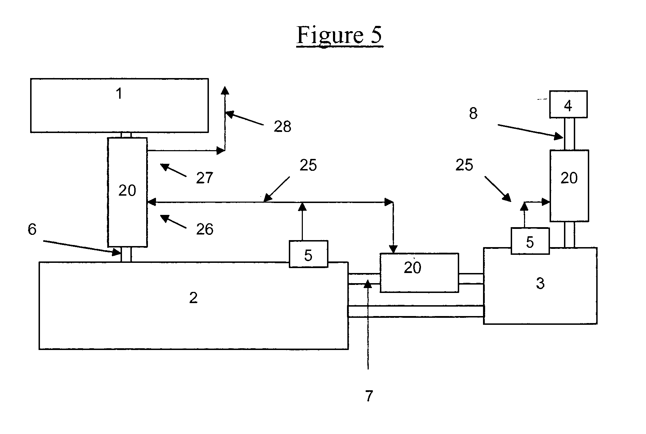

Pour obtenir une isolation thermique efficace selon l'invention, d'un tuyau en acier inoxydable (304 ou 316) de type UHP de 150 m de long transférant de l'azote UHP (entre 3000 et 4000 bars) à une température de l'ordre de -150 à -160°C entre l'échangeur aval 3 jusqu'à l'outil 4 avec buses de la Figure 5, en utilisant une enceinte 20 à manchon unique selon la Figure 3, au sein dans laquelle l'azote gazeux ne fait qu'un aller avant d'être évacué à l'atmosphère, on peut appliquer les paramètres suivants :
- Tubes : diamètre extérieur de14,8 mm et longueur de tube égale à 150 m,
- Azote liquide (LN₂) : Température d'entrée de l'azote liquide dans le tube de -155 °C
   et débit d'azote liquide : 5 l/min.
- Azote gazeux :
   - Température d'entrée de l'azote gazeux dans le tube : -196 °C
   - Débit de l'azote gazeux s'échappant des échangeurs : 10 m³/min
   - Débit de l'azote gazeux dans l'un des quatre tuyaux à isoler : 2.5 m³/min
   - Epaisseur de la couronne d'isolation gazeuse azote : 10 mm
- Isolant/protection : Conductivité moyenne aux températures cryogéniques de la mousse EPDM (monomère éthylpropyldiène) autour des deux tubes concentriques : 0.025 W/(m.K) et conductivité moyenne aux températures cryogéniques de la mousse polyuréthane autour des deux tubes concentriques : 0.019 W/(m.K)
- Autres paramètres : régime permanent ; propriétés thermo-physiques des fluides constantes dans l'intervalle de température ; températures ne variant que dans la seule direction de l'écoulement ; pertes de charges négligeables.

Les résultats obtenus sont donnés dans le Tableau suivant.

**Tableau**

| | Isolation N₂ * (co-courant) + mousse EPDM | Isolation N₂ * (contre-courant) + mousse EPDM | Isolation mousse EPDM seule | Isolation mousse polyuréthane seule |
|---|---|---|---|---|
| Température d'entrée de l'azote liquide | -155°C | -155°C | -155°C | -155°C |
| Température de sortie de l'azote liquide | -154°C | -179°C | -145°C | -145°C |
| Epaisseur d'isolant | 30 mm dont 10 mm de N₂ | 30 mm dont 10 mm de N₂ | 125 mm | 60 mm |

| | | | | |
|---|---|---|---|---|
| * Afin de compenser les pertes de charge du gaz azote dues à la tuyauterie, ce même gaz azote devra être pressuré à 5 bars dans l'exemple suivant. | | | | |

Comme on le voit, le fait de réaliser une isolation à l'azote gazeux froid (balayage autour de la canalisation véhiculant l'azote liquide) permet non seulement d'utiliser une épaisseur d'isolant plus faible qu'en l'absence d'isolation à l'azote mais aussi d'obtenir une température de sortie de l'azote liquide inférieure à celle obtenue avec des isolants seulement, d'où il en résulte une plus grande longueur de cohérence du jet, donc un meilleur rendement. De manière préférée, on met en oeuvre une isolation double, à savoir en utilisant de l'azote et un isolant solide, à savoir une mousse isolante, de préférence en polyuréthane.

## Revendications

1. Installation de travail mettant en oeuvre au moins un jet de fluide à température cryogénique sous haute pression comprenant :
- au moins un outil (4) mobile comportant une ou plusieurs buses (11) de distribution de fluide cryogénique, et
- une ou plusieurs canalisations de fluide (6, 7, 8) aptes à et conçues pour véhiculer du fluide à température cryogénique jusqu'audit outil mobile (4) de manière à alimenter au moins une buse de distribution (11) de fluide dudit outil mobile en fluide à température cryogénique et à haute pression, au moins une partie de la ou des canalisations de fluide (6, 7, 8) comprenant des moyens de calorifugation (20, 22, 22') permettant d'isoler thermiquement ladite au moins une partie de canalisation (6, 7, 8),
**caractérisée en ce que** les moyens de calorifugation (20) comprennent :
- au moins une enceinte (20) agencée autour de tout ou partie de ladite au moins une canalisation ou partie de canalisation (6, 7, 8) à calorifuger,
- au moins une source de gaz de calorifugation (5), et
- des moyens d'alimentation en gaz de calorifugation reliant fluidiquement ladite au moins une source de gaz de calorifugation (5) à l'intérieur de ladite au moins une enceinte (20) de manière à alimenter ladite au moins une enceinte (20) en gaz de calorifugation provenant de ladite au moins une source (5) de gaz de calorifugation et former une atmosphère gazeuse isolante au sein (21) de ladite au moins une enceinte (20).

2. Installation selon la revendication 1, **caractérisée en ce qu'**au moins une enceinte (20) comprend une entrée de gaz reliée fluidiquement aux moyens d'alimentation en gaz et une sortie de gaz reliée fluidiquement à l'atmosphère de manière à créer un balayage gazeux isolant au sein (21, 21') de ladite au moins une enceinte (20).

3. Installation selon l'une des revendications précédentes, **caractérisée en ce qu'**au moins une source de gaz de calorifugation est une source d'azote.

4. Installation selon l'une des revendications précédentes, **caractérisée en ce qu'**elle comporte une source (1) de fluide à température cryogénique et au moins un échangeur thermique (2 ; 3) comprenant un dispositif d'échappement (5), en particulier un évent, agencé entre la source (1) de fluide à température cryogénique et l'outil (4), et **en ce qu'**au moins une source de gaz de calorifugation comprend le dispositif d'échappement (5) d'au moins un échangeur thermique (2 ; 3).

5. Installation selon l'une des revendications précédentes, **caractérisée en ce que** la source de gaz de calorifugation comprend le dispositif d'échappement (5) d'au moins un échangeur thermique (2 ; 3) et les moyens d'alimentation en gaz de calorifugation (25) étant relié fluidiquement audit dispositif d'échappement (5) de manière à pouvoir récupérer au moins une partie du gaz s'échappant par ledit dispositif d'échappement (5), le convoyer et l'introduire subséquemment dans au moins une enceinte (20) agencée autour de tout ou partie de ladite au moins une canalisation ou partie de canalisation à calorifuger (6, 7, 8).

6. Installation selon l'une des revendications précédentes, **caractérisée en ce que** les moyens d'alimentation (25) en gaz de calorifugation comprennent au moins une canalisation d'amenée de gaz, de préférence au moins une canalisation d'amenée de gaz (25) équipée d'un dispositif de contrôle et/ou réglage de débit du gaz.

7. Installation selon l'une des revendications précédentes, **caractérisée en ce qu'**au moins une enceinte (20) comprenant une structure tubulaire (20, 22, 22') formant manchon autour de tout ou partie de ladite au moins une canalisation ou partie de canalisation à calorifuger (6, 7, 8).

8. Installation selon l'une des revendications précédentes, **caractérisée en ce qu'**au moins une enceinte (20) comprenant une première et une seconde structure tubulaire concentrique (22, 22') formant un double manchon autour de tout ou partie de ladite au moins une canalisation ou partie de canalisation à calorifuger (6, 7, 8).

9. Installation selon l'une des revendications précédentes, **caractérisée en ce qu'**au moins une couche de matériau isolant est agencée autour d'au moins une partie de la périphérie externe de l'enceinte (20).

10. Procédé pour calorifuger tout ou partie d'au moins une canalisation de fluide d'une installation de travail mettant en oeuvre au moins un outil (4) comportant une ou plusieurs buses (11) de distribution de fluide cryogénique et alimenté, directement ou indirectement, en fluide à température cryogénique par l'intermédiaire de ladite au moins une canalisation (6, 7, 8) de fluide, notamment une installation de travail selon l'une des revendications 1 à 9, **caractérisé en ce que** :
a) on agence au moins une enceinte (20, 22, 22') autour de tout ou partie de ladite au moins une canalisation ou partie de canalisation (6, 7, 8) à calorifuger, et
b) on introduit dans ladite enceinte (20, 22, 22') du gaz de calorifugation issu d'au moins une source de gaz de calorifugation (5) de manière à former une atmosphère gazeuse isolante au sein de ladite au moins une enceinte (20, 22, 22') et autour de tout ou partie de ladite au moins une canalisation ou partie de canalisation (6, 7, 8) à calorifuger.

11. Procédé selon la revendication 10, **caractérisé en ce que** le gaz de calorifugation est de l'azote ayant à l'entrée de l'enceinte de calorifugation, une pression supérieure à 1 bar, de préférence supérieure à 2 bars.

12. Procédé selon l'une des revendications 10 ou 11, **caractérisé en ce que** le gaz de calorifugation est de l'azote provenant du dispositif d'échappement (5) d'un échangeur thermique (2, 3) de l'installation.

13. Procédé selon l'une des revendications 10 à 12, **caractérisé en ce que** le fluide cryogénique distribué par la ou les buses de l'outil (4) est de l'azote liquide à une pression d'au moins 100 bar, de préférence entre 1000 et 5000 bar, et à une température inférieure à -140°C, de préférence entre environ -140 et -180°C.

14. Procédé selon l'une des revendications 10 à 13, **caractérisé en ce qu'**au moins une couche de matériau isolant est agencée autour d'au moins une partie de la périphérie externe de l'enceinte (20).

15. Procédé de traitement de surface, de décapage ou d'écroutage, d'un matériau par fluide cryogénique à haute pression, dans lequel on met en oeuvre une installation selon l'une des revendications 1 à 8 ou un procédé selon l'une des revendications 10 à 14.

## Patentansprüche

1. Bearbeitungseinrichtung, die mindestens einen Strahl Fluid kryogener Temperatur unter Hochdruck verwendet, umfassend:
- mindestens ein bewegliches Werkzeug (4), das eine oder mehrere Düsen (11) zur Verteilung von kryogenem Fluid aufweist, und
- eine oder mehrere Fluidleitungen (6, 7, 8), die dafür geeignet und eingerichtet sind, Fluid kryogener Temperatur bis zu dem beweglichen Werkzeug (4) zu transportieren, derart, dass mindestens eine Düse (11) zur Verteilung von Fluid des beweglichen Werkzeugs mit Fluid kryogener Temperatur und unter Hochdruck versorgt wird, wobei mindestens ein Teil der Fluidleitung oder Fluidleitungen (6, 7, 8) Wärmedämmungsmittel (20, 22, 22') umfasst, die es ermöglichen, den mindestens einen Leitungsteil (6, 7, 8) thermisch zu isolieren,
**dadurch gekennzeichnet, dass** die Wärmedämmungsmittel (20) Folgendes umfassen:
- mindestens einen Raum (20), der um die gesamte oder einen Teil der/des mindestens einen Leitung oder Leitungsteils (6, 7, 8), die/der wärmezudämmen ist, herum angeordnet ist,
- mindestens eine Wärmedämmungsgas-Quelle (5) und
- Mittel zur Versorgung mit Wärmedämmungsgas, welche die mindestens eine Wärmedämmungsgas-Quelle (5) mit dem Inneren des mindestens einen Raumes (20) fluidisch verbinden, derart, dass der mindestens eine Raum (20) mit Wärmedämmungsgas versorgt wird, das von der mindestens einen Wärmedämmungsgas-Quelle (5) stammt, und im Innern (21) des mindestens einen Raumes (20) eine isolierende gasförmige Atmosphäre gebildet wird.

2. Einrichtung nach Anspruch 1, **dadurch gekennzeichnet, dass** mindestens ein Raum (20) einen Gaseinlass umfasst, der fluidisch mit den Gasversorgungsmitteln verbunden ist, und einen Gasauslass umfasst, der fluidisch mit der Atmosphäre verbunden ist, derart, dass im Innern (21, 21') des mindestens einen Raums (20) eine isolierende gasförmige Spülung erzeugt wird.

3. Einrichtung nach einem der vorhergehenden Ansprüche, **dadurch gekennzeichnet, dass** mindestens eine Wärmedämmungsgas-Quelle eine Stickstoffquelle ist.

4. Einrichtung nach einem der vorhergehenden Ansprüche, **dadurch gekennzeichnet, dass** sie eine Quelle (1) für Fluid kryogener Temperatur und mindestens einen Wärmetauscher (2; 3) aufweist, der eine Austrittsvorrichtung (5), insbesondere ein Luftloch, umfasst, die zwischen der Quelle (1) für Fluid kryogener Temperatur und dem Werkzeug (4) angeordnet ist, und dass mindestens eine Wärmedämmungsgas-Quelle die Austrittsvorrichtung (5) mindestens eines Wärmetauschers (2; 3) umfasst.

5. Einrichtung nach einem der vorhergehenden Ansprüche, **dadurch gekennzeichnet, dass** die Wärmedämmungsgas-Quelle die Austrittsvorrichtung (5) mindestens eines Wärmetauschers (2; 3) umfasst und die Mittel zur Versorgung mit Wärmedämmungsgas (25) fluidisch mit der Austrittsvorrichtung (5) verbunden sind, derart, dass mindestens ein Teil des Gases, das durch die Austrittsvorrichtung (5) austritt, aufgefangen, transportiert und anschließend in mindestens einen Raum (20) eingeleitet werden kann, der um die gesamte oder einen Teil der/des mindestens einen Leitung oder Leitungsteils (6, 7, 8), die/der wärmezudämmen ist, herum angeordnet ist.

6. Einrichtung nach einem der vorhergehenden Ansprüche, **dadurch gekennzeichnet, dass** die Mittel zur Versorgung (25) mit Wärmedämmungsgas mindestens eine Gaszuführleitung umfassen, vorzugsweise mindestens eine Gaszuführleitung (25), die mit einer Vorrichtung zur Steuerung und/oder Regelung der Gasmenge versehen ist.

7. Einrichtung nach einem der vorhergehenden Ansprüche, **dadurch gekennzeichnet, dass** mindestens ein Raum (20) eine rohrförmige Struktur (20, 22, 22') umfasst, die eine Hülse um den gesamten oder einen Teil der/des mindestens einen Leitung oder Leitungsteils (6, 7, 8), die/der wärmezudämmen ist, bildet.

8. Einrichtung nach einem der vorhergehenden Ansprüche, **dadurch gekennzeichnet, dass** mindestens ein Raum (20) eine erste und eine zweite konzentrische rohrförmige Struktur (22, 22') umfasst, die eine doppelte Hülse um den gesamten oder einen Teil der/des mindestens einen Leitung oder Leitungsteils (6, 7, 8), die/der wärmezudämmen ist, bilden.

9. Einrichtung nach einem der vorhergehenden Ansprüche, **dadurch gekennzeichnet, dass** mindestens eine Schicht Isoliermaterial um mindestens einen Teil des Außenumfangs des Raumes (20) herum angeordnet ist.

10. Verfahren zum Wärmedämmen einer gesamten oder eines Teils einer Fluidleitung einer Bearbeitungseinrichtung, die mindestens ein Werkzeug (4) verwendet, das eine oder mehrere Düsen (11) zur Verteilung von kryogenem Fluid aufweist, und, direkt oder indirekt, mit Fluid kryogener Temperatur mit Hilfe der mindestens einen Fluidleitung (6, 7, 8) versorgt wird, insbesondere eine Bearbeitungseinrichtung nach einem der Ansprüche 1 bis 9, **dadurch gekennzeichnet, dass**
a) mindestens ein Raum (20, 22, 22') um die gesamte oder einen Teil der/des mindestens einen Leitung oder Leitungsteils (6, 7, 8), die/der wärmezudämmen ist, herum angeordnet wird und
b) in den Raum (20, 22, 22') Wärmedämmungsgas eingeleitet wird, das von mindestens einer Wärmedämmungsgas-Quelle (5) stammt, derart, dass im Innern des mindestens einen Raumes (20, 22, 22') und um die gesamte oder einen Teil der/des mindestens einen Leitung oder Leitungsteils (6, 7, 8), die/der wärmezudämmen ist, herum eine isolierende gasförmige Atmosphäre gebildet wird.

11. Verfahren nach Anspruch 10, **dadurch gekennzeichnet, dass** das Wärmedämmungsgas Stickstoff ist, der am Einlass des Wärmedämmungsraums einen Druck von mehr als 1 bar, bevorzugt von mehr als 2 bar aufweist.

12. Verfahren nach einem der Ansprüche 10 oder 11, **dadurch gekennzeichnet, dass** das Wärmedämmungsgas Stickstoff ist, der aus der Austrittsvorrichtung (5) eines Wärmetauschers (2, 3) der Einrichtung stammt.

13. Vorrichtung nach einem der Ansprüche 10 bis 12, **dadurch gekennzeichnet, dass** das kryogene Fluid, das durch die Düse oder Düsen des Werkzeugs (4) verteilt wird, flüssiger Stickstoff mit einem Druck von mindestens 100 bar, bevorzugt zwischen 1.000 und 5.000 bar, und einer Temperatur von weniger als -140 °C, bevorzugt zwischen ungefähr -140 und -180 °C, ist.

14. Verfahren nach einem der Ansprüche 10 bis 13, **dadurch gekennzeichnet, dass** mindestens eine Schicht Isoliermaterial um mindestens einen Teil des Außenumfangs des Raumes (20) herum angeordnet ist.

15. Verfahren zur Behandeln von Oberflächen, zum Abätzen oder zum Schälen, eines Materials durch kryogenes Fluid unter Hochdruck, bei dem eine Einrichtung nach einem der Ansprüche 1 bis 8 oder ein Verfahren nach einem der Ansprüche 10 bis 14 verwendet wird.

## Claims

1. Work assembly using at least one jet of fluid at cryogenic temperature under high pressure, comprising:
- at least one movable tool (4) comprising one or more nozzles (11) for distributing cryogenic fluid, and
- one or more fluid pipes (6, 7, 8) capable of and designed to carry fluid at cryogenic temperature to said movable tool (4) so as to supply at least one fluid distribution nozzle (11) of said movable tool with fluid at cryogenic temperature and high pressure, at least one part of the fluid pipe or pipes (6, 7, 8) comprising heat insulating means (20, 22, 22') for thermally insulating said at least one pipe part (6, 7, 8),
**characterised in that** the heat insulating means (20) comprise:
- at least one chamber (20) arranged around all or part of said at least one pipe or pipe part (6, 7, 8) to be heat insulated,
- at least one source of heat insulating gas (5), and
- heat insulating gas supply means establishing fluid communication between said at least one heat insulating gas source (5) and the inside of said at least one chamber (20), so as to supply said at least one chamber (20) with heat insulating gas from said at least one heat insulating gas source (5) and to form an insulating gaseous atmosphere within (21) said at least one chamber (20).

2. Assembly according to claim 1, **characterised in that** at least one chamber (20) comprises a gas inlet in fluid communication with the gas supply means and a gas outlet in fluid communication with the atmosphere, so as to produce an insulating gas flushing process within (21, 21') said at least one chamber (20).

3. Assembly according to either of the preceding claims, **characterised in that** at least one heat insulating gas source is a nitrogen source.

4. Assembly according to any of the preceding claims, **characterised in that** it comprises a source (1) of fluid at cryogenic temperature and at least one heat exchanger (2; 3) comprising an exhaust device (5), particularly a vent, arranged between the source (1) of fluid at cryogenic temperature and the tool (4), and **in that** at least one heat insulating gas source comprises the exhaust device (5) of at least one heat exchanger (2; 3).

5. Assembly according to any of the preceding claims, **characterised in that** the heat insulating gas source comprises the exhaust device (5) of at least one heat exchanger (2; 3), the heat insulating gas supply means (25) being in fluid communication with said exhaust device (5) in such a way that at least some of the gas escaping through said exhaust device (5) can be recovered, conveyed and subsequently introduced into at least one chamber (20) arranged around all or part of said at least one pipe or pipe part (6, 7, 8) to be heat insulated.

6. Assembly according to any of the preceding claims, **characterised in that** the heat insulating gas supply means (25) comprise at least one gas feed pipe, preferably at least one gas feed pipe (25) equipped with a device for controlling and/or adjusting the gas flow rate.

7. Assembly according to any of the preceding claims, **characterised in that** at least one chamber (20) comprising a tubular structure (20, 22, 22') forming a sleeve around all or part of said at least one pipe or pipe part (6, 7, 8) to be heat insulated.

8. Assembly according to any of the preceding claims, **characterised in that** at least one chamber (20) comprising a first and a second concentric tubular structure (22, 22') forming a double sleeve around all or part of said at least one pipe or pipe part (6, 7, 8) to be heat insulated.

9. Assembly according to any of the preceding claims, **characterised in that** at least one layer of insulating material is arranged around at least one part of the outer periphery of the chamber (20).

10. Method for heat insulating all or part of at least one fluid pipe of a work assembly using at least one tool (4) comprising one or more nozzles (11) for distributing cryogenic fluid, the tool being supplied directly or indirectly with fluid at cryogenic temperature by means of said at least one fluid pipe (6, 7, 8), in particular a work assembly according to any of claims 1 to 9, **characterised in that**:
a) at least one chamber (20, 22, 22') is arranged around all or part of said at least one pipe or pipe part (6, 7, 8) to be heat insulated, and
b) heat insulating gas from at least one heat insulating gas source (5) is introduced into said chamber (20, 22, 22') so as to form an insulating gaseous atmosphere within said at least one chamber (20, 22, 22') and around all or part of said at least one pipe or pipe part (6, 7, 8) to be heat insulated.

11. Method according to claim 10, **characterised in that** the heat insulating gas is nitrogen which has a pressure of greater than 1 bar, preferably of greater than 2 bars, at the inlet of the heat insulation chamber.

12. Method according to either claim 10 or claim 11, **characterised in that** the heat insulating gas is nitrogen from the exhaust device (5) of a heat exchanger (2, 3) of the assembly.

13. Method according to any of claims 10 to 12, **characterised in that** the cryogenic fluid distributed by the nozzle or nozzles of the tool (4) is liquid nitrogen at a pressure of at least 100 bars, preferably at a pressure of between 1000 and 5000 bars, and at a temperature of less than -140 °C, preferably of between approximately -140 and -180 °C.

14. Method according to any of claims 10 to 13, **characterised in that** at least one layer of insulating material is arranged around at least one part of the outer periphery of the chamber (20).

15. Method for surface treating, stripping or descaling a material by means of cryogenic fluid at high pressure, wherein an assembly according to any of claims 1 to 8 or a method according to any of claims 10 to 14 is used.
